# EUROPÄISCHE PATENTANMELDUNG

(11) **EP 3 989 012 A1**
(43) Veröffentlichungstag der Anmeldung: **27.04.2022**
(21) Anmeldenummer: 20202826.2
(22) Anmeldetag: 20.10.2020
(51) Int. Cl.: G05B 13/02

(54) **VERFAHREN UND KONFIGURATIONSSYSTEM ZUM KONFIGURIEREN EINER STEUEREINRICHTUNG FÜR EIN TECHNISCHES SYSTEM**

(71) Anmelder: Siemens Aktiengesellschaft, 80333 München (DE)
(72) Erfinder: Fehrer, Simon, 81369 München (DE); Hein, Daniel, 81549 München (DE); Tokic, Michel, 88069 Tettnang (DE); Udluft, Steffen, 82223 Eichenau (DE)

(57) **Zusammenfassung**

Zum Konfigurieren einer Steuereinrichtung (CTL) wird ein vorgegebener Standard-Konfigurationsdatensatz (L0) eingelesen. Weiterhin werden für eine Vielzahl von generierten Test-Konfigurationsdatensätzen (LT) jeweils eine Abweichung vom Standard-Konfigurationsdatensatz (L0) sowie eine Steuer-Performanz ermittelt. Darüber hinaus wird für die Vielzahl von Test-Konfigurationsdatensätzen (LT) eine Pareto-Optimierung ausgeführt, wobei die Abweichung sowie die Steuer-Performanz als Pareto-Zielkriterien verwendet werden. Ein aus der Pareto-Optimierung resultierender Konfigurationsdatensatz (LTO) wird dann zum Konfigurieren der Steuereinrichtung (CTL) selektiert.

## Beschreibung

Komplexe technische Systeme, wie z. B. Lichtsignalanlagen, Turbinen, Fertigungsanlagen, Roboter oder Motoren benötigen für einen produktiven Betrieb in der Regel eine aufwendige Konfiguration, um eine Performanz des technischen Systems gezielt zu optimieren. Die zu optimierende Performanz kann z.B. eine Leistung, einen Ertrag, einen Ressourcenbedarf, einen Wirkungsgrad, einen Schadstoffausstoß, eine Stabilität, einen Verschleiß und/oder andere Zielparameter des technischen Systems betreffen.

Zeitgemäße Steuereinrichtungen von technischen Systemen verwenden zur optimierten Konfiguration häufig datengetriebene Verfahren des maschinellen Lernens. Mittels derartiger Lernverfahren kann eine Steuereinrichtung darauf trainiert werden, ausgehend von aktuellen Betriebsdaten des technischen Systems diejenigen Steueraktionen zu ermitteln, die spezifisch ein gewünschtes oder anderweitig optimales Verhalten des technischen Systems bewirken. Zu diesen Zwecken steht eine Vielzahl von bekannten maschinellen Lernverfahren, insbesondere Verfahren des bestärkenden Lernens zur Verfügung.

Eine durch ein performanzgetriebenes Optimierungsverfahren gefundene Konfiguration ist jedoch in vielen Fällen noch hinsichtlich ihrer Sicherheit und/oder ihrer Benutzerakzeptanz zu prüfen oder zu validieren.

Aus der Publikation WO2016/000851A1 ist eine Steuerungsoptimierung für ein technisches System bekannt, bei der mittels einer Simulation Auswirkungen von Konfigurationseingriffen interaktiv ermittelt werden können. Eine solche interaktive Validierung bedingt jedoch häufig einen verhältnismäßig hohen manuellen Aufwand.

Es ist Aufgabe der vorliegenden Erfindung, ein Verfahren und ein Konfigurationssystem zum Konfigurieren einer Steuereinrichtung für ein technisches System anzugeben, die es erlauben, eine Sicherheit und/oder Benutzerakzeptanz einer Konfiguration mit weniger Aufwand zu verbessern.

Gelöst wird diese Aufgabe durch ein Verfahren mit den Merkmalen des Patentanspruchs 1, durch ein Konfigurationssystem mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zum Konfigurieren einer Steuereinrichtung für ein technisches System wird ein vorgegebener Standard-Konfigurationsdatensatz für die Steuereinrichtung eingelesen. Das technische System kann hierbei insbesondere eine Lichtsignalanlage, eine Turbine, eine Fertigungsanlage, ein Roboter, ein Motor, eine andere Maschine, ein anderes Gerät oder eine andere Anlage sein. Weiterhin wird eine Vielzahl von Test-Konfigurationsdatensätzen generiert. Erfindungsgemäß werden für einen jeweiligen Test-Konfigurationsdatensatz ein eine Abweichung vom Standard-Konfigurationsdatensatz quantifizierender Abweichungswert sowie ein eine Performanz für ein Steuern des technischen Systems anhand des jeweiligen Test-Konfigurationsdatensatzes quantifizierender Performanzwert ermittelt. Darüber hinaus wird für die Vielzahl von Test-Konfigurationsdatensätzen eine Pareto-Optimierung ausgeführt, wobei die Abweichung sowie die Performanz als Pareto-Zielkriterien verwendet werden. Eine Pareto-Optimierung ist bekanntermaßen eine multikriterielle Optimierung mit mehreren Zielkriterien, die hier und im Folgenden auch als Pareto-Zielkriterien bezeichnet werden. Ein aus der Pareto-Optimierung resultierender Konfigurationsdatensatz wird dann zum Konfigurieren der Steuereinrichtung selektiert.

Zum Ausführen des erfindungsgemäßen Verfahrens sind ein Konfigurationssystem, ein Computerprogrammprodukt sowie ein computerlesbares, vorzugsweise nichtflüchtiges Speichermedium vorgesehen.

Das erfindungsgemäße Verfahren sowie das erfindungsgemäße Konfigurationssystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Insofern bei der Pareto-Optimierung die Abweichung vom Standard-Konfigurationsdatensatz und damit gewissermaßen eine Ähnlichkeit zu einem Standard-Steuerverhalten berücksichtigt wird, kann eine Konfiguration ermittelt werden, die in der Regel sowohl performant ist als auch eine hohe Benutzerakzeptanz aufweist. Durch die Pareto-Optimierung können zudem nichtoptimale Konfigurationen auf einfache Weise ausgeschlossen werden.

Vorteilhafte Ausführungsformen und Weiterbildungen der Erfindung sind in den abhängigen Ansprüchen angegeben.

Nach einer vorteilhaften Ausführungsform der Erfindung können Datenelemente des Standard-Konfigurationsdatensatzes selektiert werden. Die Test-Konfigurationsdatensätze können dann anhand des Standard-Konfigurationsdatensatzes generiert werden, wobei eine Änderung der selektierten Datenelemente unterdrückt wird. Insbesondere können die selektierten Datenelemente unverändert in einen jeweiligen Standard-Konfigurationsdatensatz übernommen werden, während die anderen Datenelemente des Standard-Konfigurationsdatensatzes variiert werden. Hierdurch können auf einfache Weise unzulässige oder unerwünschte Änderungen der Konfiguration ausgeschlossen oder eine Einhaltung von Randbedingungen sichergestellt werden.

Vorteilhafterweise kann durch die Pareto-Optimierung eine Pareto-Front innerhalb der generierten Test-Konfigurationsdatensätze ermittelt werden. Zum Konfigurieren der Steuereinrichtung kann dann ein Konfigurationsdatensatz aus der Pareto-Front selektiert werden. Als Pareto-Front sei dabei auch eine Menge von Konfigurationsdatensätzen verstanden, deren Abstand zu einem mathematisch exakten Pareto-Optimum z.B. einen gegebenen Schwellenwert unterschreitet. Durch die Einschränkung der Selektion auf eine Pareto-Front wird ein Raum möglicher Konfigurationen in der Regel erheblich eingeschränkt, wobei insbesondere nicht optimale Konfigurationen wegfallen. Die Selektion sowie ggf. eine nachfolgende Optimierung von Konfigurationsdatensätzen der Pareto-Front werden so erheblich vereinfacht.

Zur Ausführung der Pareto-Optimierung kann insbesondere ein genetisches Optimierungsverfahren, ein Verfahren der genetischen Programmierung, ein gradientenbasiertes Optimierungsverfahren, ein stochastisches Gradientenverfahren, eine Partikelschwarmoptimierung, ein Metropolis-Optimierungsverfahren und/oder eines anderen Maschinenlernverfahren verwendet werden. Für die genannten Optimierungsverfahren steht eine Vielzahl von effizienten Standardroutinen zur Verfügung.

Vorteilhafterweise können bei der Durchführung der Pareto-Optimierung erzeugte, neue Konfigurationsdatensätze als Test-Konfigurationsdatensätze verwendet werden. Die neuen Konfigurationsdatensätze können dabei im Rahmen einer performanzgetriebenen Optimierung erzeugt werden. Auf diese Weise kann die Generierung der Test-Konfigurationsdatensätze bevorzugt in Richtung performanter Konfigurationen getrieben werden.

Nach einer vorteilhaften Ausführungsform der Erfindung kann zum Ermitteln des Performanzwerts für einen jeweiligen Test-Konfigurationsdatensatz das technische System und/oder ein Simulationsmodell des technischen Systems anhand des jeweiligen Test-Konfigurationsdatensatzes gesteuert werden, wobei eine resultierende Performanz des technischen Systems gemessen wird. Als Simulationsmodell kann vorzugsweise ein Surrogat-Modell des technischen Systems verwendet werden, das weniger Rechenressourcen als eine vollständige Simulation erfordert.

Nach einer bevorzugten Ausführungsform der Erfindung kann zum Ermitteln des Performanzwerts für einen jeweiligen Test-Konfigurationsdatensatz eine Abweichung eines Antwortverhaltens der mit dem jeweiligen Test-Konfigurationsdatensatz konfigurierten Steuereinrichtung von einem Antwortverhalten der mit einem performanzoptimierten Konfigurationsdatensatz konfigurierten Steuereinrichtung ermittelt werden. Der performanzoptimierte Konfigurationsdatensatz kann gewissermaßen als Maßstab für eine erreichbare Performanz verwendet werden und kann bevorzugt mittels eines Verfahrens des bestärkenden Lernens ermittelt werden. Ein solches Verfahren des bestärkenden Lernens wird häufig auch als Reinforcement Learning bezeichnet.

Nach einer weiteren Ausführungsform der Erfindung kann zum Ermitteln des Abweichungswerts für einen jeweiligen Test-Konfigurationsdatensatz eine Abweichung einer Komponentendarstellung des jeweiligen Test-Konfigurationsdatensatzes von einer Komponentendarstellung des Standard-Konfigurationsdatensatzes ermittelt werden. Die Komponentendarstellung kann dabei z.B. eine Vektordarstellung sein. Im Fall von genetisch codierten Konfigurationsdatensätzen kann die Abweichung durch eine Anzahl von Unterschieden in den Genomen der betreffenden Konfigurationsdatensätze ausgedrückt werden. Also gewissermaßen durch eine Abweichung im Genotyp der Konfigurationsdatensätze. Insbesondere kann die Abweichung durch eine minimale Anzahl von Operationen ausgedrückt werden, die benötigt werden, um einen der Konfigurationsdatensätze in den anderen umzusetzen.

Ferner kann zum Ermitteln des Abweichungswerts für einen jeweiligen Test-Konfigurationsdatensatz eine Abweichung eines Antwortverhaltens der mit dem jeweiligen Test-Konfigurationsdatensatz konfigurierten Steuereinrichtung von einem Antwortverhalten der mit dem Standard-Konfigurationsdatensatz konfigurierten Steuereinrichtung ermittelt werden. Eine solche Abweichung kann gewissermaßen als Abweichung im Phänotyp der Konfigurationsdatensätze aufgefasst werden.

Ein Ausführungsbeispiel der Erfindung wird nachfolgend anhand der Zeichnung näher erläutert. Dabei zeigen jeweils in schematischer Darstellung:
- Figur 1: eine Lichtsignalanlage mit einer Steuereinrichtung und
- Figur 2: ein erfindungsgemäßes Konfigurationssystem beim Konfigurieren einer Steuereinrichtung.

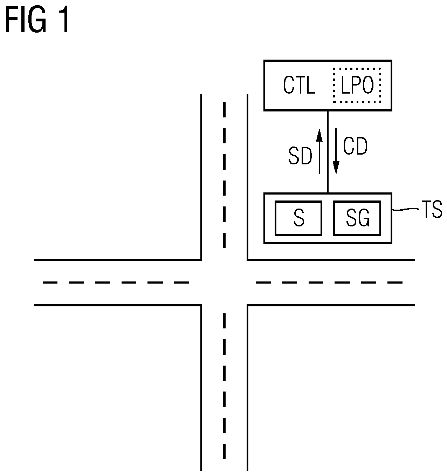

Figur 1 zeigt in schematischer Darstellung eine an einer Straßenkreuzung angeordnete Lichtsignalanlage als technisches System TS, das mit einer Anlagensteuerung CTL als Steuereinrichtung für die Lichtsignalanlage TS gekoppelt ist. Die Lichtsignalanlage TS verfügt über eine Signalgruppe SG, die eine oder mehrere Ampeln umfassen kann sowie über eine Sensorik S zum fortlaufenden Messen und/oder Erfassen von Betriebsparametern der Lichtsignalanlage TS sowie von lokalen Verkehrsdaten.

Alternativ kann das technische System TS auch eine Turbine, eine Fertigungsanlage, einen Roboter, einen Motor, einen 3D-Drucker, eine andere Maschine, ein anderes Gerät oder eine andere Anlage umfassen. Das erfindungsgemäße Verfahren zur Konfiguration der Steuereinrichtung CTL lässt sich in einem solchen Fall in analoger Weise anwenden.

Die Anlagensteuerung CTL ist rechnergestützt konfigurierbar und kann als Teil der Lichtsignalanlage TS oder ganz oder teilweise extern zur Lichtsignalanlage TS implementiert sein. Die Anlagensteuerung CTL dient zum verkehrsabhängigen Steuern der Lichtsignalanlage TS.

Die Anlagensteuerung CTL soll derart konfiguriert werden, dass das technische System TS in optimierter Weise gesteuert wird. Unter einem Steuern eines technischen Systems, hier TS, sei hierbei auch dessen Regelung sowie eine Ausgabe und Verwendung von steuerungsrelevanten, d.h. zur gezielten Beeinflussung des technischen Systems beitragenden Daten und Steuersignalen verstanden.

Im vorliegenden Ausführungsbeispiel soll die Anlagensteuerung CTL mittels Verfahren des maschinellen Lernens so konfiguriert werden, dass eine Steuerung von Signalphasen oder anderer Verkehrsleitaktionen der Signalgruppe SG bzw. der Lichtzeichenanlage TS abhängig von den erfassten Betriebsparametern und Verkehrsdaten optimiert wird. Unter dem Begriff Optimieren sei hier und im Folgenden auch ein Annähern an ein Optimum verstanden. Dabei sollen insbesondere Wartezeiten für Fahrzeuge verringert und/oder eine Durchsatzrate von Fahrzeugen erhöht werden. Alternativ oder zusätzlich können noch andere zu einer Performanz der Lichtzeichenanlage TS bzw. der Anlagensteuerung CTL beitragenden Größen optimiert werden.

Ein Steuerungsverhalten der Anlagensteuerung CTL wird durch ihre Konfiguration festgelegt. Zur optimierten Konfiguration der Anlagensteuerung CTL wird ein optimierter Konfigurationsdatensatz LPO zur Anlagensteuerung CTL übermittelt, durch den eine Vielzahl von Einstellparametern der Anlagensteuerung CTL spezifisch eingestellt werden. Ein hierdurch eingestelltes Steuerungsverhalten der Anlagensteuerung CTL wird häufig auch als Policy oder Antwortverhalten bezeichnet. Der optimierte Konfigurationsdatensatz LPO wird durch ein erfindungsgemäßes Verfahren ermittelt.

Ein solcher, das Steuerungsverhalten der Anlagensteuerung CTL festlegender Konfigurationsdatensatz kann durch unterschiedliche Datenstrukturen dargestellt werden. So kann ein jeweiliger Konfigurationsdatensatz eine Vielzahl von Parametern, Variablen oder Aktionsauswahlregeln, einen Programmcode, einen Syntaxbaum, einen mathematischen Ausdruck, einen Klassifikator, neuronale Gewichte, einen PID-Regler (PID: Proportional Integral Derivative), einen sonstigen Regler und/oder andere Beschreibungsdaten für die Konfiguration umfassen.

Durch die Sensorik S werden die fortlaufend erfassten Verkehrsdaten und Betriebsparameter der Lichtzeichenanlage TS in Form von Sensordaten SD zur Anlagensteuerung CTL übermittelt. Die Betriebsparameter können dabei Angaben über Betriebszustände der Lichtzeichenanlage TS, z. B. über eine aktuelle Ampelphase, über Schaltzustände, über Steuerzustände, über Steueraktionen, über Systemzustände und/oder über Systemeigenschaften umfassen. Die Verkehrsdaten können insbesondere Angaben über eine Anzahl und/oder Geschwindigkeit von Fahrzeugen, über eine aktuelle Verkehrsbelastung und/oder über eine lokale Schadstoffbelastung umfassen.

Abhängig von den übermittelten Sensordaten SD werden durch die Anlagensteuerung CTL Steuerdaten CD generiert, die von der Anlagensteuerung CTL zum optimierten Steuern der Lichtzeichenanlage TS zu dieser übermittelt werden. Die Generierung der Steuerdaten CD erfolgt gemäß der durch den optimierten Konfigurationsdatensatz LPO konfigurierten Policy der Anlagensteuerung CTL.

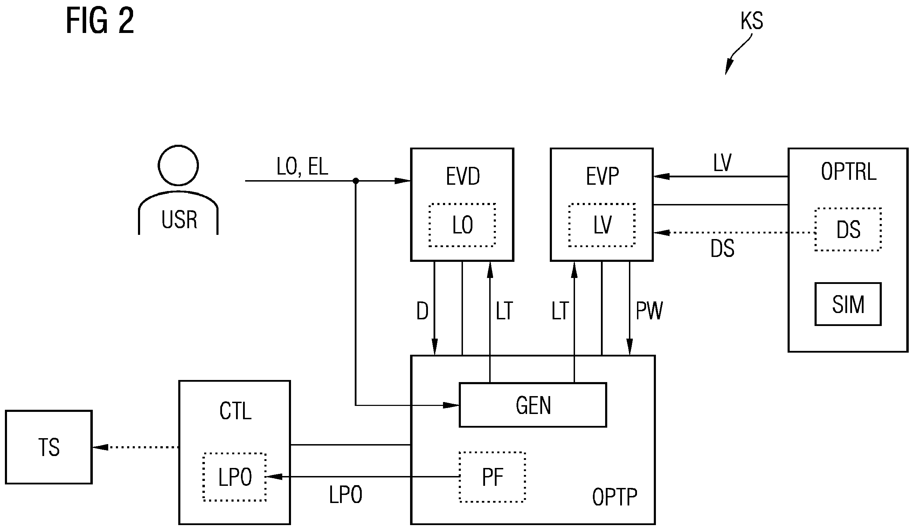

Figur 2 zeigt in schematischer Darstellung ein erfindungsgemäßes Konfigurationssystem KS beim Konfigurieren einer Steuereinrichtung CTL. Insofern in Figur 2 die gleichen oder korrespondierende Bezugszeichen, wie in Figur 1 verwendet werden, bezeichnen diese Bezugszeichen die gleichen oder korrespondierende Entitäten, die insbesondere wie oben beschrieben, implementiert oder ausgestaltet sein können.

Die Steuereinrichtung CTL kann einen Teil des Konfigurationssystems KS bilden oder ganz oder teilweise extern zum Konfigurationssystem KS angeordnet sein. Das Konfigurationssystem KS und/oder die Steuereinrichtung CTL weisen einen oder mehrere Prozessoren zur Durchführung des erfindungsgemäßen Verfahrens sowie einen oder mehrere Speicher zum Speichern von zu verarbeitenden Daten auf. Wie oben bereits erwähnt, soll die Steuereinrichtung CTL mittels des Konfigurationssystems KS derart konfiguriert werden, dass ein technisches System TS, z. B. eine Lichtsignalanlage, in optimierter Weise gesteuert wird.

Als Ausgangspunkt für die Konfiguration liegt ein Standard-Konfigurationsdatensatz L0 vor, der von einem Benutzer USR des Konfigurationssystems KS eingegeben oder von einer Datenbank eingelesen wird. Der Standard-Konfigurationsdatensatz L0 legt eine Standardkonfiguration der Steuereinrichtung CTL fest, durch die die Steuereinrichtung CTL auf eine Sensorik reagiert und abhängig davon das technische System TS steuert. Das durch die Standardkonfiguration bewirkte Standard-Steuerungsverhalten ist in der Regel benutzbar und validiert, aber noch nicht optimal.

Weiterhin wird vom Benutzer USR oder aus einer Datenbank eine Angabe EL über bei der Optimierung der Konfiguration konstant zu haltende Datenelemente des Standard-Konfigurationsdatensatzes L0 eingelesen. Die übrigen Datenelemente des Standard-Konfigurationsdatensatzes L0 können mithin im Rahmen der Optimierung verändert werden. Auf diese Weise können gegenüber der Standardkonfiguration unzulässige oder unvertraute Änderungen des Steuerungsverhaltens ausgeschlossen werden. Bei einer Lichtzeichenanlage als technisches System TS können so eine Dauer von Gelbphasen oder eine Mindestdauer für Grünphasen oder Rotphasen konstant gehalten werden.

Die durch Variation der nicht konstant zu haltenden Datenelemente des Standard-Konfigurationsdatensatzes L0 erreichbaren Konfigurationen bilden den der Optimierung zugänglichen Konfigurationsraum.

Der Standard-Konfigurationsdatensatz L0 sowie die Angabe EL werden zu einem Abweichungsbewerter EVD des Konfigurationssystems KS zur Initialisierung des Abweichungsbewerters EVD übermittelt.

Der Abweichungsbewerter EVD dient dazu, für einen jeweiligen Konfigurationsdatensatz eine Abweichung der hierdurch gegebenen Konfiguration oder des hierdurch festgelegten Antwortverhaltens von der Standardkonfiguration zu quantifizieren. Durch die jeweilige Abweichung kann insbesondere eine jeweilige Ähnlichkeit zur Standardkonfiguration ausgedrückt werden. Eine solche Ähnlichkeit kann dabei gewissermaßen als Vertrautheit der gegebenen Konfiguration bzw. des resultierenden Steuerungsverhaltens aufgefasst werden. Eine hohe Vertrautheit des Steuerungsverhaltens erhöht in der Regel auch dessen Benutzerakzeptanz und/oder dessen Sicherheit. Im Falle einer Lichtsignalanlage als technisches System TS erfüllt eine zur Standardkonfiguration ähnliche Konfiguration eher die Erwartungen der Verkehrsteilnehmer als eine weniger ähnliche Konfiguration.

Weiterhin wird durch einen ersten Optimierer OPTRL ein performanzoptimierter Konfigurationsdatensatz LV für die Steuereinrichtung CTL ermittelt. Zu diesem Zweck verfügt der erste Optimierer OPTRL über ein Simulationsmodell SIM, das das technische System TS hinsichtlich seiner Steuerung modelliert und simuliert. Im Falle einer Lichtzeichenanlage als technisches System TS simuliert das Simulationsmodell SIM die betreffende Straßenkreuzung und die Verkehrsströme. Der performanzoptimierte Konfigurationsdatensatz LV wird vorzugsweise mittels eines Verfahrens des bestärkenden Lernens anhand des Simulationsmodells SIM ermittelt.

Die Performanz, hinsichtlich der die Optimierung erfolgt, kann insbesondere eine Leistung, einen Ertrag, eine Geschwindigkeit, einen Zeitbedarf, eine Laufzeit, einen Ressourcenbedarf, einen Wirkungsgrad, eine Präzision, eine Stabilität, einen Verschleiß, eine Lebensdauer, einen Schadstoffausstoß, einen Verkehrsdurchsatz und/oder eine Fehlerrate des technischen Systems TS betreffen. Zur Durchführung einer solchen performanzgetriebenen Optimierung stehen eine Vielzahl bekannter und effizienter Verfahren des bestärkenden Lernens zur Verfügung.

Die Optimierung durch den ersten Optimierer OPTRL erfolgt ohne Berücksichtigung einer Abweichung zum Standard-Konfigurationsdatensatz L0, so dass der performanzoptimierte Konfigurationsdatensatz LV möglicherweise zu einem ganz unvertrauten Steuerungsverhalten führt und möglicherweise außerhalb des zulässigen Konfigurationsraums liegt. Der performanzoptimierte Konfigurationsdatensatz LV kann deshalb in der Regel nicht direkt zur Konfiguration der Steuereinrichtung CTL verwendet werden, sondern bildet im Rahmen der Erfindung einen Vergleichsmaßstab für die überhaupt erreichbare Performanz der Steuereinrichtung CTL bzw. des technischen Systems TS.

Durch das vom ersten Optimierer OPTRL ausgeführte Verfahren des bestärkenden Lernens wird ein Datensatz DS generiert, der erreichte Systemzustände des technischen Systems TS, ausgeführte Steueraktionen, hierdurch erreichte Folgezustände sowie resultierende, einen Erfolg der Steueraktion quantifizierende Belohnungen im Sinne des bestärkenden Lernens umfasst.

Der performanzoptimierte Konfigurationsdatensatz LV sowie der Datensatz DS werden vom ersten Optimierer OPTRL zu einem Performanzbewerter EVP des Konfigurationssystems KS übermittelt.

Der Performanzbewerter EVP dient dazu, für einen jeweiligen Konfigurationsdatensatz eine Performanz des anhand dieses Konfigurationsdatensatzes gesteuerten technischen Systems TS zu quantifizieren. Auf diese Weise wird gewissermaßen eine Steuerperformanz der damit konfigurierten Steuereinrichtung CTL bewertet. Der performanzoptimierte Konfigurationsdatensatz LV wird durch den Performanzbewerter EVP dabei als Vergleichsmaßstab für die erreichbare Performanz verwendet.

Das Konfigurationssystem KS verfügt weiterhin über einen zweiten Optimierer, der als Pareto-Optimierer OPTP zur Durchführung einer Pareto-Optimierung ausgebildet ist. Eine Pareto-Optimierung ist eine multikriterielle Optimierung, bei der mehrere unterschiedliche Zielkriterien, sogenannte Pareto-Zielkriterien, eigenständig berücksichtigt werden. Als Resultat der Pareto-Optimierung wird eine sogenannte Pareto-Front PF ermittelt. Eine solche Pareto-Front wird häufig auch als Pareto-Menge bezeichnet. Eine Pareto-Front, hier PF, sind diejenigen Lösungen eines multikriteriellen Optimierungsproblems, bei denen ein Zielkriterium nicht verbessert werden kann, ohne ein anderes Zielkriterium zu verschlechtern. Eine Pareto-Front bildet also gewissermaßen eine Menge optimaler Kompromisse. Insbesondere lassen sich nicht in der Pareto-Front PF enthaltene Lösungen hinsichtlich mindestens eines Zielkriteriums noch verbessern. Infolgedessen fallen durch eine Einschränkung auf die Pareto-Front PF eine Vielzahl sicher nicht optimaler Lösungen weg. Insofern eine Pareto-Front in der Regel nur einen sehr kleinen Teil eines möglichen Lösungsraums umfasst, reduziert sich durch Einschränkung auf eine Pareto-Front ein nachfolgender Selektions- oder weiterer Optimierungsaufwand beträchtlich.

Erfindungsgemäß wird durch den Pareto-Optimierer OPTP eine Pareto-Front PF bezüglich der Pareto-Zielkriterien der Abweichung von der Standardkonfiguration sowie der Performanz ermittelt. Die Optimierung erfolgt hierbei in Richtung größerer Performanz und kleinerer Abweichung, d. h. größerer Vertrautheit des Steuerungsverhaltens. Für derartige Pareto-Optimierungen steht eine Vielzahl von Standardroutinen, insbesondere Verfahren des maschinellen Lernens zur Verfügung.

Im vorliegenden Ausführungsbeispiel wird zur Pareto-Optimierung ein Verfahren der genetischen Programmierung verwendet. Im Rahmen der genetischen Programmierung werden im zulässigen Konfigurationsraum optimierte Konfigurationen gesucht. Zu diesem Zweck generiert ein Generator GEN des Pareto-Optimierers OPTP eine Vielzahl neuer Konfigurationsdatensätze, die als Test-Konfigurationsdatensätze LT verwendet werden. Zur Initialisierung des Generators GEN werden der Standard-Konfigurationsdatensatz L0 sowie die Angabe EL über die konstant zu haltenden Datenelemente des Standard-Konfigurationsdatensatzes L0 zum Generator GEN übermittelt. Die Test-Konfigurationsdatensätze LT werden durch den Generator GEN aus dem Standard-Konfigurationsdatensatz L0 erzeugt, wobei die durch die Angabe EL identifizierten Datenelemente des Standard-Konfigurationsdatensatzes L0 nicht verändert werden, während dessen restliche Datenelemente im zulässigen Konfigurationsraum variiert werden.

Die generierten Test-Konfigurationsdatensätze LT werden vom Generator GEN zum Performanzbewerter EVP sowie zum Abweichungsbewerter EVD übermittelt. Der Performanzbewerter EVP ermittelt für einen jeweiligen Test-Konfigurationsdatensatz LT, wie oben bereits angedeutet, einen jeweiligen Performanzwert PW, der eine Performanz des anhand dieses Test-Konfigurationsdatensatzes LT gesteuerten technischen Systems TS quantifiziert. Hierzu wird im vorliegenden Ausführungsbeispiel eine Abweichung eines Antwortverhaltens der mit dem jeweiligen Test-Konfigurationsdatensatz LT konfigurierten Steuereinrichtung CTL von einem Antwortverhalten der mit dem performanzoptimierten Konfigurationsdatensatz LV konfigurierten Steuereinrichtung CTL ermittelt. Dabei werden die im Datensatz DS enthaltenen Systemzustände als repräsentative Stützstellen verwendet, für die die betreffenden Antwortverhalten verglichen werden. Der berechnete Performanzwert PW ist dabei umso höher, je näher ein Antwortverhalten des Test-Konfigurationsdatensatzes LT am Antwortverhalten des performanzoptimierten Konfigurationsdatensatzes LV liegt.

Alternativ oder zusätzlich kann eine Performanz des jeweiligen Test-Konfigurationsdatensatzes LT auch dadurch ermittelt werden, dass das hierdurch festgelegte Steuerungsverhalten durch ein Simulationsmodell des technischen Systems TS bzw. seiner Steuereinrichtung CTL für eine Vielzahl von Zeitschritten simuliert wird. Dabei wird eine kumulierte Belohnung oder ein kumulierter Ertrag des simulierten Verhaltens gemessen. Vorzugsweise wird hierbei als Simulationsmodell ein sogenanntes Surrogat-Modell des technischen Systems TS verwendet, das weniger Rechenressourcen als eine detaillierte Simulation erfordert.

Der für den jeweiligen Test-Konfigurationsdatensatz LT ermittelte jeweilige Performanzwert PW wird vom Performanzbewerter EVP zum Pareto-Optimierer OPTP übermittelt. Der übermittelte Performanzwert PW wird vom Pareto-Optimierer OPTP als Fitness des jeweiligen Test-Konfigurationsdatensatzes LT im Sinne der genetischen Programmierung verwendet. Der Performanzbewerter EVP implementiert somit eine perfomanzauswertende Fitnessfunktion für die Test-Konfigurationsdatensätze LT.

Die genetische Programmierung erzeugt eine Vielzahl von Test-Konfigurationsdatensätzen LT unterschiedlicher Fitness. Durch die performanzauswertende Fitnessfunktion wird die genetische Generierung bevorzugt in Richtung performanter Konfigurationsdatensätze getrieben. Nichtsdestotrotz wird eine multikriterielle Optimierung durchgeführt, bei der die Abweichung zum Standard-Konfigurationsdatensatz L0 als eigenständige Optimierungsdimension verwendet wird.

Die letztgenannte Abweichung wird durch den Abweichungsbewerter EVD ermittelt. Wie oben bereits angedeutet, ermittelt der Abweichungsbewerter EVD für einen jeweiligen Test-Konfigurationsdatensatz LT einen jeweiligen Abweichungswert D, der die Abweichung zwischen dem jeweiligen Test-Konfigurationsdatensatz LT und dem Standard-Konfigurationsdatensatz L0 und damit deren Ähnlichkeit quantifiziert.

Der Abweichungswert kann beispielsweise als euklidischer Abstand in einem Vektorraum einer Komponentendarstellung der Konfigurationsdatensätze LT und L0 bestimmt werden zu D = |LT-L0| oder D = (LT-L0)². Im Fall von genetisch codierten Konfigurationsdatensätzen LT und L0 kann der Abweichungswert D durch eine Anzahl von Unterschieden in den Genomen der Konfigurationsdatensätze LT und L0 ausgedrückt werden. Insbesondere durch eine minimale Anzahl von Operationen, die notwendig ist, um den Standard-Konfigurationsdatensatz L0 in den Test-Konfigurationsdatensatz LT umzusetzen. Falls die Konfigurationsdatensätze L0 und LT als Syntaxbäume codiert sind, kann der Abweichungswert D als sogenannte Tree-Edit-Distance ermittelt werden.

Alternativ oder zusätzlich kann auch ein jeweiliges Antwortverhalten des Test-Konfigurationsdatensatzes LT mit einem Antwortverhalten des Standard-Konfigurationsdatensatzes L0 verglichen werden und abhängig davon der Abweichungswert D berechnet werden.

Der Abweichungswert D wird vom Abweichungsbewerter EVD zum Pareto-Optimierer OPTP übermittelt. Durch den Pareto-Optimierer OPTP wird abhängig von den empfangenen Abweichungswerten D und Performanzwerten PW eine Pareto-Front PF innerhalb der generierten Test-Konfigurationsdatensätze LT ermittelt.

Aus der resultierenden Pareto-Front PF wird schließlich ein optimierter Konfigurationsdatensatz LPO selektiert. Gegebenenfalls können bei der Selektion des optimierten Konfigurationsdatensatzes LPO noch vorgegebene Selektionskriterien, insbesondere eines oder mehrere weitere Optimierungskriterien angewandt werden. Durch die Einschränkung der Selektion bzw. einer nachfolgenden Optimierung auf die Pareto-Front PF wird der Raum möglicher Konfigurationen in der Regel erheblich eingeschränkt, wobei insbesondere nicht optimale Konfigurationen wegfallen. Die Selektion des optimierten Konfigurationsdatensatzes LPO oder auch weitere Optimierungen werden so erheblich vereinfacht.

Der optimierte Konfigurationsdatensatz LPO wird bestimmungsgemäß zum Konfigurieren der Steuereinrichtung CTL ausgegeben und/oder direkt zur Steuereinrichtung CTL übermittelt, um diese zum optimierten Steuern des technischen Systems TS zu konfigurieren. Die resultierende Konfiguration der Steuereinrichtung CTL führt zu einem Steuerverhalten, das gleichzeitig sowohl eine hohe Performanz als auch eine hohe Benutzerakzeptanz und/oder Sicherheit aufweist. Zudem können einzuhaltende Randbedingungen auf einfache Weise mittels der Angabe EL definiert werden.

## Patentansprüche

1. Computerimplementiertes Verfahren zum Konfigurieren einer Steuereinrichtung (CTL) für ein technisches System (TS), wobei
a) ein vorgegebener Standard-Konfigurationsdatensatz (L0) für die Steuereinrichtung (CTL) eingelesen wird,
b) eine Vielzahl von Test-Konfigurationsdatensätzen (LT) generiert wird,
c) für einen jeweiligen Test-Konfigurationsdatensatz (LT):
- ein eine Abweichung vom Standard-Konfigurationsdatensatz (L0) quantifizierender Abweichungswert (D) ermittelt wird, und
- ein eine Performanz für ein Steuern des technischen Systems anhand des jeweiligen Test-Konfigurationsdatensatzes (LT) quantifizierender Performanzwert (PW) ermittelt wird,
d) für die Vielzahl von Test-Konfigurationsdatensätzen (LT) eine Pareto-Optimierung ausgeführt wird, wobei die Abweichung sowie die Performanz als Pareto-Zielkriterien verwendet werden, und
e) ein aus der Pareto-Optimierung resultierender Konfigurationsdatensatz (LPO) zum Konfigurieren der Steuereinrichtung (CTL) selektiert wird.

2. Verfahren nach Anspruch 1, **dadurch gekennzeichnet,**
**dass** Datenelemente des Standard-Konfigurationsdatensatzes (L0) selektiert werden, und
**dass** die Test-Konfigurationsdatensätze (LT) anhand des Standard-Konfigurationsdatensatzes (L0) generiert werden, wobei eine Änderung der selektierten Datenelemente unterdrückt wird.

3. Verfahren nach einem der vorhergehenden Ansprüche, **dadurch gekennzeichnet,**
**dass** durch die Pareto-Optimierung eine Pareto-Front (PF) innerhalb der generierten Test-Konfigurationsdatensätze (LT) ermittelt wird, und
**dass** ein Konfigurationsdatensatz (LPO) aus der Pareto-Front (PF) zum Konfigurieren der Steuereinrichtung (CTL) selektiert wird.

4. Verfahren nach einem der vorhergehenden Ansprüche, **dadurch gekennzeichnet,**
**dass** die Pareto-Optimierung mittels eines genetischen Optimierungsverfahrens, eines Verfahrens der genetischen Programmierung, eines gradientenbasierten Optimierungsverfahrens, eines stochastischen Gradientenverfahrens, einer Partikelschwarmoptimierung, eines Metropolis-Optimierungsverfahrens und/oder eines anderen Maschinenlernverfahrens ausgeführt wird.

5. Verfahren nach einem der vorhergehenden Ansprüche, **dadurch gekennzeichnet, dass**
bei der Durchführung der Pareto-Optimierung erzeugte, neue Konfigurationsdatensätze als Test-Konfigurationsdatensätze (LT) verwendet werden.

6. Verfahren nach Anspruch 5, **dadurch gekennzeichnet, dass**
die neuen Konfigurationsdatensätze im Rahmen einer performanzgetriebenen Optimierung erzeugt werden.

7. Verfahren nach einem der vorhergehenden Ansprüche, **dadurch gekennzeichnet, dass**
zum Ermitteln des Performanzwerts (PW) für einen jeweiligen Test-Konfigurationsdatensatz (LT) das technische System (TS) und/oder ein Simulationsmodell des technischen Systems (TS) anhand des jeweiligen Test-Konfigurationsdatensatzes (LT) gesteuert wird und dabei eine resultierende Performanz des technischen Systems (TS) gemessen wird.

8. Verfahren nach einem der vorhergehenden Ansprüche, **dadurch gekennzeichnet, dass**
zum Ermitteln des Performanzwerts (PW) für einen jeweiligen Test-Konfigurationsdatensatz (LT) eine Abweichung eines Antwortverhaltens der mit dem jeweiligen Test-Konfigurationsdatensatz (LT) konfigurierten Steuereinrichtung (CTL) von einem Antwortverhalten der mit einem performanzoptimierten Konfigurationsdatensatz (LV) konfigurierten Steuereinrichtung (CTL) ermittelt wird.

9. Verfahren nach Anspruch 5, **dadurch gekennzeichnet,**
**dass** der performanzoptimierte Konfigurationsdatensatz (LV) mittels eines Verfahrens des bestärkenden Lernens ermittelt wird.

10. Verfahren nach einem der vorhergehenden Ansprüche, **dadurch gekennzeichnet, dass**
zum Ermitteln des Abweichungswerts (D) für einen jeweiligen Test-Konfigurationsdatensatz (LT) eine Abweichung einer Komponentendarstellung des jeweiligen Test-Konfigurationsdatensatzes (LT) von einer Komponentendarstellung des Standard-Konfigurationsdatensatzes (L0) ermittelt wird.

11. Verfahren nach einem der vorhergehenden Ansprüche, **dadurch gekennzeichnet, dass**
zum Ermitteln des Abweichungswerts (D) für einen jeweiligen Test-Konfigurationsdatensatz (LT) eine Abweichung eines Antwortverhaltens der mit dem jeweiligen Test-Konfigurationsdatensatz (LT) konfigurierten Steuereinrichtung (CTL) von einem Antwortverhalten der mit dem Standard-Konfigurationsdatensatz (L0) konfigurierten Steuereinrichtung (CTL) ermittelt wird.

12. Verfahren nach einem der vorhergehenden Ansprüche, **dadurch gekennzeichnet,**
**dass** das technische System (TS) eine Lichtsignalanlage, eine Turbine, eine Fertigungsanlage, ein Roboter, ein Motor, eine andere Maschine, ein anderes Gerät oder eine andere Anlage ist.

13. Konfigurationssystem (KS) zum Konfigurieren einer Steuereinrichtung (CTL) für ein technisches System (TS), eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12.

15. Computerlesbares Speichermedium mit einem Computerprogrammprodukt nach Anspruch 14.
